Europäisches Patentamt

European Patent Office

Office européen des brevets

(19)

(11) Veröffentlichungsnummer: **0 199 268**
**A2**

(12) # EUROPÄISCHE PATENTANMELDUNG

(21) Anmeldenummer: **86105207.4**

(22) Anmeldetag: **15.04.86**

(51) Int. Cl.4: **H04M 11/04 , H03M 7/30**

(30) Priorität: **18.04.85 DE 3514088**

(43) Veröffentlichungstag der Anmeldung:
**29.10.86 Patentblatt 86/44**

(84) Benannte Vertragsstaaten:
**AT CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Strehl, Herbert, Dipl.-Ing.**
**Drozzaweg 15**
**D-8000 München 70(DE)**

(54) **Anordnung zum Darstellen von Standbildern, grafischen Mustern und/oder Texten an einem Bildschirm einer Anzeigeeinheit.**

(57) Zum Darstellen von Standbildern, grafischen Mustern und/oder Texten an einem Bildschirm (BS) einer Anzeigeeinheit (F), insbesondere eines für den Dienst "Bildschirmtext" vorgesehenen Fernsehgeräts ist in der Anzeigeeinheit (F) neben einem ersten Decoder (D1) für die Erzeugung der grafischen Muster und/oder Texte in Abhängigkeit von von einer Zentralstelle empfangenen Signalen ein zweiter Decoder (D2) zum Erzeugen von Bildsignalen mit hoher Auflösung in Abhängigkeit von ebenfalls von der Zentralstelle empfangenen Signalen vorgesehen. Eine Umschalteinheit (S1, S2) führt die von der Zentralstelle empfangenen Signale jeweils einem der beiden Decoder (D1, D2) zu und verbindet jeweils einen der beiden Decoder (D1, D2) mit einer Ansteuereinheit (AS) für den Bildschirm (BS) der Anzeigeeinheit (F). Während die grafischen Muster und/oder Texte zeichenorientiert binärcodiert übertragen werden, werden die Standbilder entsprechend einer PCM-Codierung digital übertragen. Der zweite Decoder (D2) enthält einen analogen oder digitalen Standbildspeicher, in dem das Standbild zwischengespeichert wird.

FIG 2

## Anordnung zum Darstellen von Standbildern, grafischen Mustern und/oder Texten an einem Bildschirm einer Anzeigeeinheit

Die Erfindung bezieht sich auf eine Anordnung zum Darstellen von Standbildern, grafischen Mustern und/oder Texten an einem Bildschirm einer Anzeigeeinheit entsprechend dem Oberbegriff des Patentanspruchs 1.

Es ist bereits allgemein bekannt, an einem Bildschirm einer Anzeigeeinheit, beispielsweise an einem Bildschirm eines mit einem Decoder für den Dienst "Bildschirmtext" versehenen Fernsehgeräts grafische Muster und/oder Texte darzustellen. Die grafischen Muster und/oder Texte werden über eine Telefonleitung mit 1200 Bit/s übertragen. Entsprechendes gilt für die in den Leerzeilen des Fernsehprogramms übertragenen Videotextsignale.

Ursprünglich war die für die Übertragung der grafischen Muster und/oder Texte verwendete Norm nur für die Übertragung und Darstellung der Texte vorgesehen. Mit einer neuen Norm ist aber auch eine verbesserte grafische Darstellung möglich. Bei einigen der geplanten Anwendungsfälle für Bildschirmtext, wie beispielsweise Reise-oder Versandhauskataloge, aber auch bei Videotextdarstellungen wäre es wünschenswert, anstelle der grafischen Muster auf Standbilder mit einer vom Fernsehen her gewohnten Bildauflösung bzw. Bildqualität oder wenigstens einer verbesserten Bildqualität zu ermöglichen.

Aus einer Veröffentlichung "Funkschau" 26, 1982, Seite 28 ist es bereits bekannt, an einem Bildschirm einer Anzeigeeinheit auch Standbilder darzustellen. Diese Standbilder weisen beispielsweise nur ein Neuntel der Bildfläche des Bildschirms auf und sie werden entsprechend einer Transformationscodierung übertragen. Hiermit kann ein Bild zunächst mit geringer Auflösung sehr rasch übertragen werden. Wenn weitere Details hinzukommen bzw. wenn man diese haben will, läßt sich der Bildeindruck stufenweise, beispielsweise in acht Stufen verbessern.

Der Erfindung liegt die Aufgabe zugrunde, eine Anordnung zum Darstellen von Standbildern, grafischen Mustern und/oder Texten an einem Bildschirm einer Anzeigeeinheit anzugeben, bei der die Übertragung der Standbilder nach einer anderen Codierung als die Übertragung der grafischen Muster und der Texte erfolgt und bei der sich die Standbilder über die gesamte Bildfläche des Bildschirms erstrecken können.

Erfindungsgemäß wird die Aufgabe bei der Anordnung der eingangs genannten Art durch die im kennzeichnenden Teil des Patentanspruchs 1 angegebenen Merkmale gelöst.

Die Anzeigeeinheit, beispielsweise ein mit einem Bildschirmtextdecoder versehenes Fernsehgerät wird mit einem weiteren Bilddecoder versehen, wie er für die digitale Bildübertragung geeignet ist. Der Inhalt der einzelnen Standbilder kann zusammen mit den anderen Bildschirmtextsignalen in den Bildschirmtextdatenbanken als Zentralstellen gespeichert werden. Für den Fall, daß bei der Bildschirmtextdarstellung die Unterstützung durch ein Standbild mit verbesserter Bildauflösung bzw. Bildqualität notwendig ist, wird von der Zentralstelle ein Umschaltsignal gesendet und danach von der Übertragung der Bildschirmtextsignale auf die Signale für den Bilddecoder mit der verbesserten Bildauflösung umgeschaltet. Nach der Übertragung eines Standbildes kann wieder auf die Bildschirmtextsignale umgeschaltet werden.

Während sich beim gegenwärtigen Bildschirmtextdienst durch die niedrige Übertragungsgeschwindigkeit von 1,2 kBit/s noch erhebliche Wartezeiten für den Bildaufbau ergeben, kann bei der Einführung des allgemein bekannten ISDN-Netzes durch die dann üblichen 64 bzw. 128 kBit/s mit zumutbaren Wartezeiten gerechnet werden, weil der Bildaufbau durch einen im zweiten Decoder vorgesehenen eigenen Bildspeicher unsichtbar stattfinden kann, während sich der Teilnehmer mit dem Lesen des zuvor gesendeten Bildschirmtextes beschäftigt. Ähnliches gilt bei Videotext, bei dem die mittlere Datenübertragungsgeschwindigkeit 36 kBit/s bei der heute üblichen Verwendung von zwei Leerzeilen pro Halbbild bzw. 72 kBit/s bei der geplanten Verwendung von vier Leerzeilen pro Halbbild beträgt. Bei der im Kabelfernsehsystem möglichen Verwendung von ganzen Fernsehkanälen, d. h. allen Zeilen für die Videotextübertragung spielt die Wartezeit überhaupt keine Rolle mehr, weil die Datenübertragungsgeschwindigkeit in der Zeile 6,9 MBit/s beträgt.

Der Standbildspeicher in dem zweiten Decoder ist vorzugsweise als digitaler Speicher ausgebildet, dem ein digitaler Bilddecoder nachgeschaltet ist. Insbesondere ist es vorteilhaft, wenn der Standbildspeicher als CCD-Speicher ausgebildet ist. Der Standbildspeicher kann auch als Analogspeicher ausgebildet sein. In diesem Fall ist ihm ein digitaler Bilddecoder vorgeschaltet.

Die Umschalteinheit ist mit einer Schaltersteuerung verbunden, der eine ein Umschaltsignal erkennende Schaltstufe vorgeschaltet ist. Im Verbindungsweg zur Zentralstelle ist eine Verzögerungsstufe vorgesehen, die die von der Zentralstelle empfangenen Signale entsprechend der Schaltzeit der Schaltstufe und der Schaltersteuerung verzögert.

Die Umschalteinheit wird aus einer ersten und einer zweiten Schaltereinheit gebildet, die wahlweise den ersten Decoder oder den zweiten Decoder mit der Zentralstelle bzw. mit einer Anzeigesteuereinheit verbinden. Die zweite Schaltereinheit verbindet den ersten Decoder vorzugsweise während der Einspeicherung des Standbilds in den Standbildspeicher mit dem·ersten Decoder. Die zweite Schaltereinheit kann nach dem Einspeichern des Standbildes in den Standbildspeicher selbsttätig die Anzeigesteuerung selbsttätig mit dem zweiten Decoder verbinden.

Besonders geringe Wartezeiten für den Benutzer werden erreicht, wenn die Übertragung des Standbilds über ein dienstintegrierendes Übertragungsnetz (ISDN-Netz) erfolgt. Das Standbild wird vorzugsweise entsprechend einer PCM- oder DPCM-Codierung codiert übertragen. Es ist auch möglich, die Übertragung entsprechend einer an sich bekannten Transformationscodierung durchzuführen, bei der das Standbild erst in groben Umrissen entsteht und mit fortschreitender Zeit die Details erscheinen. Dies ist auch bei PCM-und DPCM-Codierung beispielsweise durch Überspringen von Zeilen bei der Abtastung möglich. Weiterhin ist es möglich, die Übertragung des Standbilds unter Verwendung einer redundanzvermindernden und/oder einer gegen Fehler gesicherten Codierung durchzuführen.

Ausführungsbeispiele einer Anordnung gemäß der Erfindung werden im folgenden anhand von Zeichnungen näher erläutert. Es zeigen

Fig. 1 ein Blockschaltbild einer Anordnung zum Übertragen von Standbildern, grafischen Mustern und/oder Texten von einer Zentralstelle zu einer Anzeigeeinheit,

Fig. 2 ein Blockschaltbild einer ersten Ausführungsform einer Anordnung zum Darstellen der Standbilder, grafischen Muster und/oder Texte an einer Anzeigeeinheit,

Fig. 3 ein zweites Ausführungsbeispiel der Anordnung zum Darstellen der Standbilder, grafischen Muster und/oder Texten an der Anzeigeeinheit.

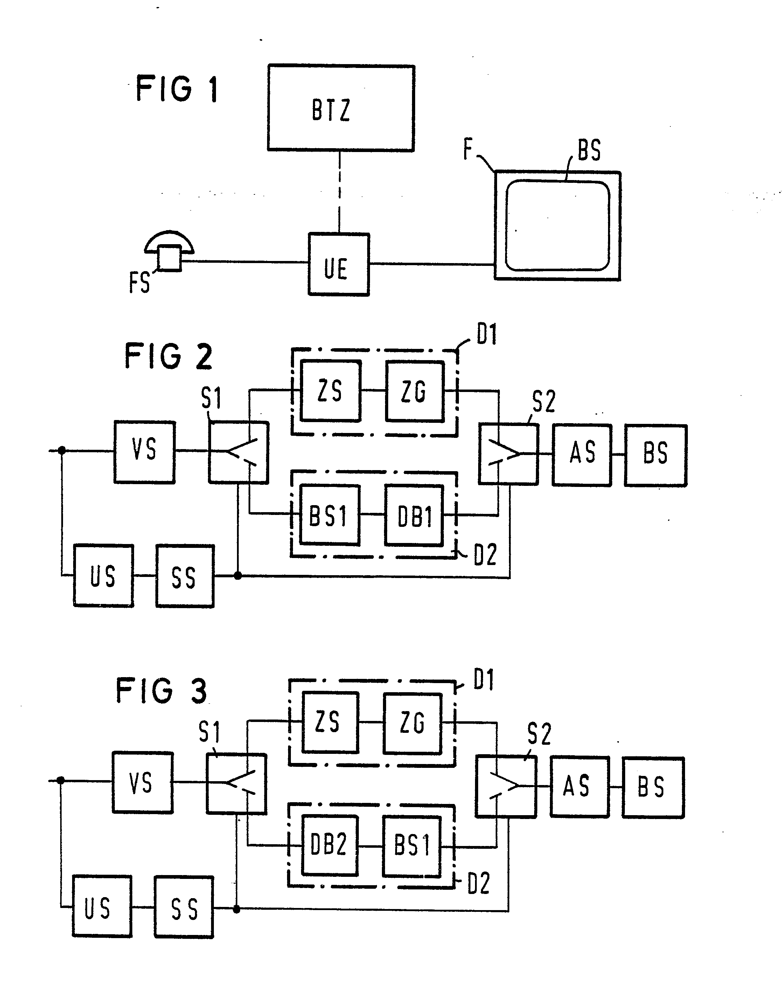

Bei der in Fig. 1 dargestellten Anordnung sind in einer Zentralstelle, die beispielsweise als Bildschirmtextzentrale BTZ ausgebildet ist, die Standbilder, grafischen Muster und/oder Texte gespeichert. Die Speicherung erfolgt zweckmäßigerweise digital. Ebenso erfolgt die Übertragung zu einer Teilnehmerstelle digital, wobei bei Verwendung des bisher üblichen Bildschirmtextdienstes die Übertragung mit einer Übertragungsgeschwindigkeit von 1,2 kBit/s über die Fernleitung FL erfolgt. Eine Übertragung von Standbildern mit hoher Auflösung bei dieser Übertragungsgeschwindigkeit erfordert verhältnismäßig lange Wartezeiten für den Bildaufbau. In den nächsten Jahren ist die Einführung eines dienstintegrierenden Netzes (ISDN) vorgesehen und in diesem Netz kann die Übertragung mit 64 bzw. 128 kBit/s erfolgen.

Die Fernleitung FL ist an einer Übertragungseinheit UE angeschlossen, die beispielsweise als Bildschirmtextmodem ausgebildet ist. Bei einer Übertragung entsprechend dem Dienst Bildschirmtext werden die digitalen Signale frequenzmoduliert zur Übertragungseinheit UE übertragen und dort zum Fernsehgerät F übertragen. Die Übertragungseinheit UE ist im Fall des Bildschirmtextmodems auch für den Anschluß eines Fernsprechers FS ausgebildet und im Ruhezustand ist die Fernleitung FL mit dem Fernsprecher FS verbunden. Erst beim Übergang in den Dienst Bildschirmtext wird die Fernleitung FL mit dem Fernsehgerät F verbunden.

Die in Fig. 2 dargestellte Anordnung, die vorzugsweise in einem Fernsehgerät F untergebracht ist, enthält zwei Decoder D1 und D2, wobei der Decoder D1 als an sich bekannter Bildschirmtextdecoder ausgebildet ist und für die Darstellung von grafischen Mustern und/oder Texten am Bildschirm BS des Fernsehgeräts F dient. Der Decoder D2 ist für die Darstellung der Standbilder vorgesehen. Die Anordnung enthält eine aus zwei Schaltereinheiten S1 und S2 gebildete Umschalteinheit.

Die von der Übertragungseinheit UE kommenden Signale werden bei der Darstellung entsprechend dem Dienst Bildschirmtext über die Schaltereinheit S1 dem Decoder D1 zugeführt, der einen Zeichenspeicher ZS und einen Zeichengenerator ZG enthält. Von dem Decoder D1 gelangen die Signale über die Schaltereinheit S2 zu einer Anzeigesteuerung AS und von dieser zum Bildschirm BS des Fernsehgeräts F. Bei der Darstellung von Standbildern mit hoher Auflösung gelangen die von der Übertragungseinheit UE kommenden Signale über die Schaltereinheit S1 zum Decoder D2 und von diesem über die Schaltereinheit S2 zur Anzeigesteuerung AS. Der Decoder D2 enthält einen digitalen Bildspeicher BS1, in dem die dem Standbild zugeordneten Signale zwischengespeichert werden und einen digitalen Bilddecoder DB1, der aus den im Bildspeicher BS1 gespeicherten Signalen die für die Darstellung der Standbilder an dem Bildschirm BS geeigneten Signale erzeugt. Die Umschaltung vom Decoder D1 auf den Decoder D2 mittels der Schaltereinheit S1 erfolgt unter Verwendung von Umschaltzeichen, die von der Zentralstelle BTZ über die Übertragungseinheit UE dem Fernsehgerät F zugeführt werden. Die Anordnung enthält eine Schaltstufe US, die das Auftreten des Umschaltsignals erkennt und eine Schaltersteuerung SS, die beim Auftreten des Umschaltsignals die Schaltereinheit S1 und gegebenenfalls auch die Schaltereinheit S2 mit dem Decoder D2 verbindet. Zur Kompensation der Durchlaufzeiten des Umschaltsignals ist im Verbindungsweg zwischen der Übertragungseinheit UE und der Schaltereinheit S1 eine Verzögerungsstufe VS vorgesehen, die das Bildsignal solange verzögert, bis die Umschaltung durch die Schaltereinheit S1 erfolgt ist.

Der digitale Bildspeicher BS1 ist beispielsweise als CCD-Speicher ausgebildet. Die Einspeicherung in den Bildspeicher BS1 kann auch gleichzeitig mit einer Darstellung von grafischen Mustern und/oder Texten am Bildschirm BS erfolgen. In diesem Fall ist die Schaltereinheit S1 mit dem Decoder D2 verbunden, während die Schaltereinheit S2 noch mit dem Decoder D1 verbunden ist. Auf diese Weise werden die Wartezeiten vermindert, die sich für den Aufbau des Standbilds mit hoher Auflösung ergeben. Wenn das Standbild vollständig im Bildspeicher BS1 gespeichert ist, kann entweder selbsttätig oder manuell die Umschaltung mittels der Schaltereinheit S2 erfolgen.

Der Decoder D2 kann derart ausgebildet sein, daß er für eine Transformationscodierung geeignet ist, bei der das Standbild erst in groben Umrissen entsteht und mit fortschreitender Zeit die Details erscheinen. Es ist auch möglich, das Standbild durch digitale Bildcodierverfahren mit Redundanzverminderung zu übertragen. Damit kann das Standbild mit sehr hoher Qualität sowohl in der Zentralstelle BTZ als auch im Fernsehgerät F gespeichert werden. Bei der Verwendung von Codierern/Decodierern, die auch als Codecs bezeichnet werden, wie sie bei der Bewegbildcodierung mit den Bitraten 34, 70 und 140 MBit/s, ergeben sich bei der Übertragung mit 64 kBit/s Übertragungszeiten von etwa 16, 32 oder 60 s und bei einer Übertragungsgeschwindigkeit von 128 kBit/s Aufbauzeiten von 8, 16 und 32 s. Denkbar ist auch der Einsatz von Codierverfahren, die in ihrer Auflösung und damit auch in der Speichergröße ungefähr zwischen 1 MBit bei der üblichen Standbildqualität und 1 kByte bei Bildschirmtext liegen.

Die in Fig. 3 dargestellte Anordnung unterscheidet sich von der in Fig. 2 dargestellten Anordnung im wesentlichen nur dadurch, daß anstelle des digitalen Bildspeichers BS1 ein analoger Bildspeicher BS2 vorgesehen ist und daß der digitale Bilddecoder DB2 dem analogen Bildspeicher BS2 vorgeschaltet ist.

**Bezugszeichenliste**

BTX Bildschirmtextzentrale

FL Fernleitung

UE Übertragungseinheit

F Fernsehgerät

FS Fernsprecher

BS Bildschirm

D1, D2 Decoder

S1, S2 Schalteinheiten

ZS Zeichenspeicher

ZG Zeichengenerator

AS Anzeigesteuerung

BS1, BS2 Bildspeicher

DB1, DB2 Bilddecoder

US Schaltstufe

VS Verzögerungsstufe

**Ansprüche**

1. Anordnung zum Darstellen von Standbildern, grafischen Mustern und/oder Texten an einem Bildschirm einer Anzeigeeinheit, bei der die Standbilder, grafischen Muster und/oder Texte in einer Zentralstelle gespeichert werden und über eine Fernleitung und eine Übertragungseinheit zur Anzeigeeinheit übertragen werden und bei der die grafischen Muster und/oder Texte unter Verwendung eines ersten Decoders an dem Bildschirm der Anzeigeeinheit darstellbar sind, **dadurch gekennzeichnet** , daß zur Darstellung der Standbilder eine Umschalteinheit (S1, S2) vorgesehen ist, die wahlweise die von der Zentralstelle empfangenen Signale bei der Darstellung der grafischen Muster und/oder Texte über den ersten Decoder einer Anzeigesteuerung (AS) und bei der Darstellung der Standbilder mit hoher Auflösung über den zweiten Decoder (D2) der Anzeigesteuerung (AS) zuführt.

2. Anordnung nach Anspruch 1, **dadurch gekennzeichnet** , daß der zweite Decoder (D2) einen Bildspeicher (BS1, BS2) und einen digitalen Bildcodierer (DB1, DB2) enthält.

3. Anordnung nach Anspruch 2, **dadurch gekennzeichnet**, daß der Bildspeicher (BS1) als digitaler Speicher ausgebildet ist, dem der Bilddecoder - (DB1) nachgeschaltet ist.

4. Anordnung nach Anspruch 2 oder Anspruch 3, **dadurch gekennzeichnet**, daß der Bildspeicher - (BS1) als CCD-Speicher ausgebildet ist.

5. Anordnung nach Anspruch 2, **dadurch gekennzeichnet**, daß der Bildspeicher (BS2) als analoger Speicher ausgebildet ist, dem der Bilddecoder vorgeschaltet ist.

6. Anordnung nach einem der Ansprüche 1 bis 5, **dadurch gekennzeichnet**, daß eine die Umschalteinheit (S1, S2) ansteuernde Schaltersteuerung (SS) vorgesehen ist, der eine ein Umschaltsignal erkennende Umschaltstufe (US) vorgeschaltet ist.

7. Anordnung nach Anspruch 6, **dadurch gekennzeichnet**, daß eine Verzögerungsstufe (VS) vorgesehen ist, die die von der Zentralstelle (BTZ) abgegebenen Signale entsprechend den Schaltzeiten der Umschaltstufe (US) und der Schaltersteuerung (SS) verzögert.

8. Anordnung nach einem der Ansprüche 1 bis 7, **dadurch gekennzeichnet**, daß die Umschalteinheit (S1, S2) aus einer ersten Schaltereinheit (S1), die die von der Zentralstelle (BTZ) empfangenen Signale wahlweise dem ersten Decoder - (D1) oder dem zweiten Decoder (D2) zuführt und aus einer zweiten Schaltereinheit (S2) gebildet wird, die wahlweise den ersten Decoder (D1) oder den zweiten Decoder (D2) mit der Anzeigesteuerung (AS) verbindet.

9. Anordnung nach Anspruch 8, **dadurch gekennzeichnet**, daß die zweite Schaltereinheit (S2) während der Einspeicherung des Standbilds in dem Bildspeicher (BS1, BS2) die Anzeigesteuerung (AS) mit dem ersten Decoder (D1) verbindet.

10. Anordnung nach Anspruch 8, **dadurch gekennzeichnet**, daß die zweite Schaltereinheit (S2) nach dem Einspeichern des Standbilds in den Bildspeicher (BS1, BS2) selbsttätig die Anzeigesteuerung (AS) selbsttätig mit dem zweiten Decoder verbindet.

11. Anordnung nach einem der Ansprüche 1 bis 10, **dadurch gekennzeichnet**, daß die Übertragung des Standbilds über ein dienstintegrierendes Übertragungssystem (ISDN) erfolgt.

12. Anordnung nach einem der Ansprüche 1 bis 11, **dadurch gekennzeichnet** , daß das Standbild entsprechend einer PCM-oder DPCM-Codierung in an sich bekannter Weise übertragen wird.

13. Anordnung nach einem der Ansprüche 1 bis 12, **dadurch gekennzeichnet**, daß die Übertragung entsprechend einer an sich bekannten Transformationscodierung erfolgt, bei der das Standbild erst in groben Umrissen entsteht und mit fortschreitender Zeit die Details erscheinen.

14. Anordnung nach einem der Ansprüche 1 bis 13, **dadurch gekennzeichnet**, daß die Übertragung des Standbildes mittels redundanzvermindernder Bildcodierung erfolgt.

15. Anordnung nach einem der Ansprüche 1 bis 4, **dadurch gekennzeichnet**, daß die Übertragung des Standbildes mittels einer gegen Fehler gesicherten Codierung erfolgt.

FIG 1

FIG 2

FIG 3